# EUROPEAN PATENT APPLICATION

(11) **EP 4 545 429 A2**
(43) Date of publication of application: **30.04.2025**
(21) Application number: 24200155.0
(22) Date of filing: 13.09.2024
(51) Int. Cl.: B65B 57/00, B65B 59/00

(54) **CONTAINER PROCESSING METHOD AND CONTAINER PROCESSING MACHINE**

(30) Priority: 06.10.2023 JP 2023174486
(71) Applicant: Pacraft Co., Ltd., Tokyo 108-0014 (JP)
(72) Inventor: Yamada, Shinji, Yamaguchi-ken (JP); Yamane, Noriyuki, Yamaguchi-ken (JP)
(74) Representative: Grünecker Patent- und Rechtsanwälte PartG mbB

(57) **Abstract**

A container processing method includes the steps of: acquiring information on a switchable object associated with a container processing machine with a sensor; and performing a container processing with the container processing machine, based on a container processing information that is associated with the acquired information on a switchable object.

## Description

### TECHNICAL FIELD

The present disclosure relates to a container processing method and a container processing machine.

### BACKGROUND ART

In a packaging machine using bags, bags of the appropriate type for a desired packaging processing are set up and then are provided sequentially to the packaging machine (see, for example, Japanese patent application publication No. 2023-089828).

### SUMMARY OF THE INVENTION

A packaging machine and a bag type are not always tied together, and a wrong type of bag may be set onto a packaging machine. In such cases, it is not always easy for an operator to realize in advance that a wrong type of bag will actually be provided to a packaging machine.

In particular, in cases where many types of bags are originally scheduled to be handled by a single packaging machine, such as in "Original Equipment Manufacturing (OEM)" production, a wrong type of bag may be set on the packaging machine when the bag type to be handled is switched, which could lead to production loss and increased operator workload.

Also, in container processing machines (e.g., packaging machines) that perform processing using containers such as bags, objects other than containers that can be switched (e.g., contents introduced into containers, jigs, and other objects in general) may be used, and such objects may be mistakenly switched by an operator.

An object of the present disclosure is to provide a technique advantageous for properly switching a switchable object in a container processing machine to a desired one.

An aspect of the present disclosure is directed to a container processing method including the steps of: acquiring information on a switchable object associated with a container processing machine with a sensor; and performing a container processing with the container processing machine, based on a container processing information that is associated with the acquired information on a switchable object.

The switchable object may include at least one of a container, a workpiece, a content introduced into a container, and a jig.

An operating parameter of the container processing machine for the container processing may be set by a control unit, based on the container processing information.

The information on a switchable object can be obtained at a plurality of locations, and the container processing information that is associated with the acquired information on a switchable object may be determined according to a location where the information on a switchable object is acquired.

An operating parameter of the container processing machine for the container processing may be set by a control unit, based on a state information indicating a current state of the container processing machine.

The container processing machine may include a plurality of holding units for supporting a plurality of containers, and an operating parameter of the container processing machine for the container processing may be set by a control unit, based on an identification information that identifies each of the plurality of holding units.

The container processing method may include a step of providing at least one of the acquired information on a switchable object and the container processing information associated with the acquired information on a switchable object, to a device other than the container processing machine.

The container processing performed by the container processing machine may be determined by a location of the switchable object.

The container processing method may include a step of registering the acquired information on a switchable object and the associated container processing information in a database in a form of the acquired information on a switchable object and the associated container processing information being associated with each other when the container processing information associated with the acquired information on a switchable object is not registered in the database in which the information on a switchable object and the associated container processing information is registered in a form of the acquired information on a switchable object and the associated container processing information being associated with each other.

The sensor may acquire the information on a switchable object optically or via wireless communication.

Another aspect of the present disclosure is directed to a container processing machine comprising: a control unit; and a container processing unit that performs a container processing under control of the control unit, wherein the control unit acquires information on a switchable object associated with a container processing machine, via a sensor, and performs the container processing based on container processing information that associated with the acquired information on a switchable object.

The present disclosure provides a technique advantageous for properly switching a switchable object in a container processing machine to a desired one.

### BRIEF DESCRIPTION OF DRAWINGS

Fig. 1 is a block diagram showing an example of a processing system;
Fig. 2 is a flowchart showing an example of a packaging method (in particular, a processing information setting method);
Fig. 3 is a flowchart showing an example of a packaging method (in particular, a processing information setting method);
Fig. 4 is a flowchart showing an example of a packaging method (in particular, a processing information setting method); and
Fig. 5 is an oblique perspective diagram of an example of a packaging machine (a container processing machine).

### DETAILED DESCRIPTION

Exemplary embodiments of the present disclosure are described below with reference to the drawings.

The following embodiments exemplarily describe a packaging method and a packaging machine that perform a packaging processing using bags. However, the disclosed technology is not limited to the packaging methods and the packaging machines described below, but is applicable to container processing methods and container processing machines that perform processing using containers in general.

The terms "upstream" and "downstream" in the following description are based on the flow of the packaging processing (the container processing).

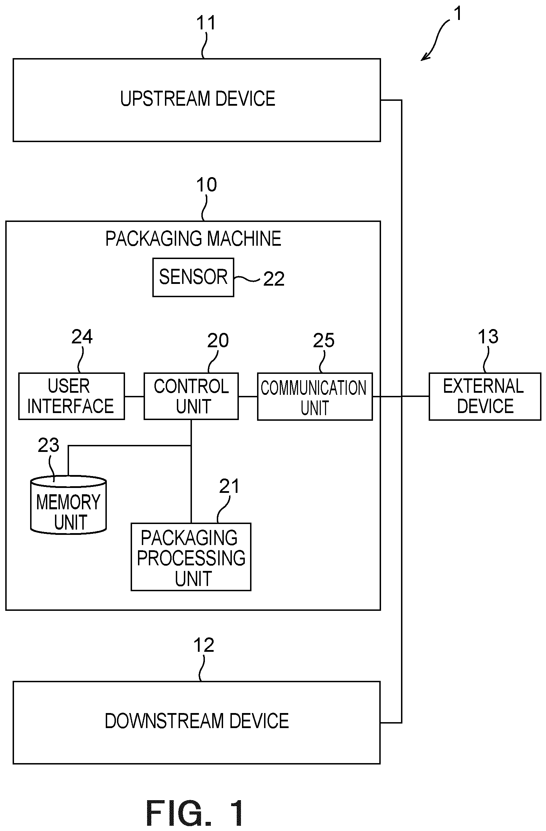

Fig. 1 is a block diagram showing an example of a processing system 1.

The processing system 1 shown in Fig. 1 comprises a packaging machine (a container processing machine) 10, an upstream device 11 provided upstream from the packaging machine 10, and a downstream device 12 provided downstream from the packaging machine 10. Each of the packaging machine 10, the upstream device 11 and the downstream device 12 is connected to an external device 13 and is configured to send and receive data (information) to and from the external device 13, as necessary.

The upstream device 11, the downstream device 12, and the external device 13 are not limited, and may perform a processing related to the packaging processing (the container processing) performed by the packaging machine 10 and may perform a processing not related to the packaging processing. Further, the upstream device 11, the downstream device 12 and the external device 13 may comprise actuators that perform mechanical behaviors and may be configured as devices that are not equipped with such actuators (e.g., information processing devices such as computers).

The packaging machine 10 comprises a control unit 20, a packaging processing unit 21 driven under the control of the control unit 20, a sensor 22, a memory unit 23, a user interface 24, and a communication unit 25. The control unit 20 may be configured by one or more hardware and/or software, can be typically configured by a computer equipped with an arithmetic unit, and may be configured as a PLC (Programmable Logic Controller), for example.

The packaging processing unit 21 performs a packaging processing, which is a process using bags (containers), under the control of the control unit 20. In a case where the packaging processing unit 21 includes a plurality of processing units, at least a part of the plurality of processing units may operate without being controlled by the control unit 20.

The sensor 22 acquires various information and transmits it to the control unit 20. The various information acquired by the sensor 22 may be presented via the user interface 24 under the control of the control unit 20 (e.g., by a pop-up display) in such a manner that the acquired various information is recognizable to an operator.

The sensor 22 of the present embodiment can acquire various information at any given time (e.g., all the time) through any given method. The sensor 22 may, for example, include a scanner (e.g., a handheld scanner or a code reader) that optically reads code information (e.g., bar codes (one-dimensional) or two-dimensional codes (matrix two-dimensional codes, etc.)), or may use radio frequency identification (RFID) or other wireless communication, and may include a sensor that receives radio waves carrying information. The sensor 22 may also include an image capturing device (such as a camera), and various information may be acquired based on imaging data obtained by the image capturing device capturing an object (e.g., a characteristic part of an object such as a pattern or shape) that shows various information. The processing of the image capture data to acquire various information from the image capture data may be performed by the sensor 22 or by the control unit 20 analyzing the image capture data sent from the sensor 22.

In particular, the sensor 22 of the present embodiment acquires information on a "switchable object" associated with the packaging machine (the container processor) 10. The "switchable object" here is not limited and may include, for example, at least one of a container (such as a bag, a pouch or a cup), a workpiece, a content (filling) introduced into a container, and a jig. The "switchable object" may also include a person (e.g., an operator (a user)).

Switching of switchable objects may therefore include, for example, switching of packaging equipment type, items and control parameters.

The target detected by the sensor 22 is not limited. For example, a switchable object itself may be provided with various information in a form that can be detected by the sensor 22. Thus, if the switchable object is a bag (a container), code information may be printed on the bag (the container) and the code information may be optically read by the sensor 22 which is configured as a scanner.

The memory unit 23 stores various information, and the data (information) that can be stored in the memory unit 23 is not limited. The various information stored in the memory unit 23 can be read out by the control unit 20 and can be used for any processing and any application. Although not shown in the drawings, the various information stored in the memory unit 23 may be read out by any device other than the control unit 20 (e.g., the packaging processing unit 21, the sensor 22, the user interface 24 and/or the communication unit 25) as appropriate and may be used for any processing and any application. Further, in the memory unit 23, a data processing, such as storing new data (information), rewriting (including updating) stored data and deleting stored data, may be performed by the control unit 20, for example.

The memory unit 23 of the present embodiment functions as a database in which information on switchable objects associated with the packaging machine (the container processing machine) 10 and container processing information to be associated with the switchable information are registered. The packaging machine 10 (e.g., the packaging processing unit 21) performs a packaging processing (a container processing) based on the container processing information that is associated with information on switchable objects acquired by the sensor 22.

The user interface 24 functions as an input unit that accepts information input to the packaging machine 10 by an operator (user), and also functions as an output unit that outputs information presented to a user from the packaging machine 10 (e.g., a display unit that presents information visually and/or a speaker that presents information by voice etc.). Such functions of the user interface 24 as input and output units may be realized by an integral device (e.g., a touch panel device, etc.) or by separate devices.

Information input to the user interface 24 by an operator is sent from the user interface 24 to the control unit 20. At least a part of the information sent from the control unit 20 to the user interface 24 is output from the user interface 24 in a form recognizable by an operator.

The communication unit 25 transmits and receives various types of data (various types of information), for example, between the upstream device 11, the downstream device 12 and the external device 13. Information received by communication unit 25 is transmitted from the communication unit 25 to the control unit 20. At least a part of the information sent from the control unit 20 to the communication unit 25 is transmitted from the communication unit 25 to a target device that is to receive the transmission (e.g., the upstream device 11, the downstream device 12, and/or the external device 13).

Next, an example of the packaging method (the container processing method) performed by the processing system 1 (in particular, the packaging machine 10) shown in Fig. 1 will be described.

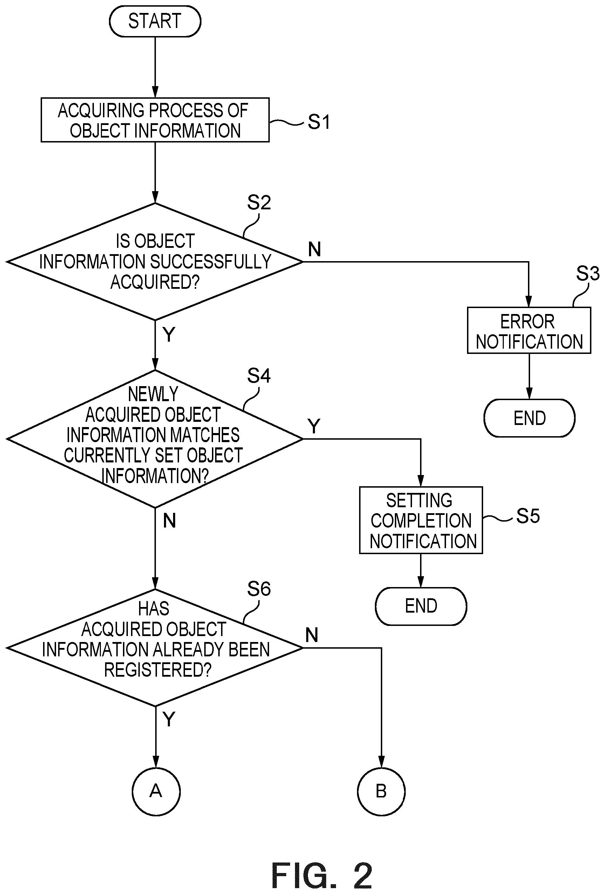

Figs. 2 through 4 are flowcharts showing an example of a packaging method (in particular, a processing information setting method).

In the example shown in Figs. 2 to 4, first, a step of acquiring information on a switchable object (e.g., a bag) associated with the packaging machine 10 is performed by the sensor 22 (S1 in Fig. 2).

This step S1 may be performed at any timing (e.g., before/after starting the packaging machine 10, before the packaging processing by the packaging machine 10 starts, during the packaging processing, or after the end of the packaging processing) by an operator for example.

The control unit 20 determines whether the information on the switchable object associated with the packaging machine 10 has been properly acquired by the sensor 22 in step S1 (S2). If it is determined that the information on the switchable object has not been properly acquired (N in S2), the control unit 20 performs an error notification via the user interface 24 to notify the user that the information on the switchable object has not been properly acquired (S3), and then this processing information setting flow is terminated under the control of the control unit 20.

On the other hand, if it is determined that the information on the switchable object has been properly acquired (Y in S2), the control unit 20 determines whether the information on the switchable object newly acquired by the sensor 22 matches the information on the switchable object currently set in the packaging machine 10 (S4).

If the newly obtained switchable object information matches the currently set switchable object information (Y in S4), the control unit 20 performs a setting completion notification via the user interface 24 to notify the user that the packaging machine 10 is properly set based on an appropriate container processing information (S5), and then this processing information setting flow is terminated under the control of control unit 20. In this step S5, a message may be presented to an operator via the user interface 24 indicating that the newly obtained switchable object information matches the currently set switchable object information.

The setting of the packaging machine 10 based on the container processing information includes, for example, that the operating parameters of the packaging machine 10 (e.g., the packaging processing unit 21) for the packaging processing are set based on the container processing information. By switching the settings of the operating parameters of the packaging machine 10, it is possible, for example, to change the amount of contents introduced into a bag (container) in the content introduction process in the packaging machine 10, to change the printing content on a bag in the printing process in the packaging machine 10, to change the heating temperature for sealing a bag in the heat sealing process in the packaging machine 10, and to change the distance (width) between grippers that form a pair and grip a bag in the packaging machine 10.

On the other hand, if the newly acquired information on the switchable object does not match the currently set information on the switchable object (N in S4), the control unit 20 determines whether the information on the switchable object newly acquired by the sensor 22 is already registered in the database of the memory unit 23 (S6).

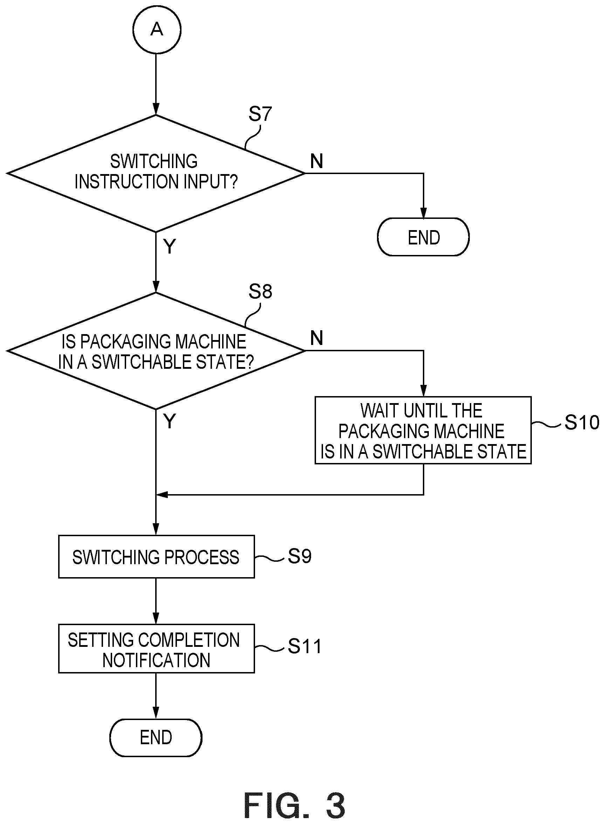

In this step S6, if the newly acquired information on the switchable object is determined to be already registered (Y in S6), the control unit 20 determines whether or not an instruction to switch the switchable object is input by an operator via the user interface 24 (S7 in Fig. 3). For example, by an operator contacting a pre-prepared physical button or a software button (e.g., a button presented on the touch panel of the user interface 24), an instruction to switch the switchable object may be input by an operator and be sent to the control unit 20.

If it is determined that no switching instruction is input by an operator in this step S7 (N in S7), this processing information setting flow is terminated under the control of the control unit 20.

On the other hand, if it is determined that the switching instruction is input by an operator in this step S7 (Y in S7), the control unit 20 determines whether the packaging machine 10 is placed in a state in which it is possible to switch the switchable object (S8) or not, based on various control information for driving various devices. For example, if the packaging processing is in progress in the packaging machine 10, it may be determined that the packaging machine 10 is not placed in a state in which the switchable object can be switched. On the other hand, if the packaging processing is not in progress in the packaging machine 10, it may be determined that the packaging machine 10 is placed in a state in which the switchable object can be switched.

If it is determined in this step S8 that the packaging machine 10 is placed in a switchable state (Y in S8), the control unit 20 performs the switching process (S9). On the other hand, if it is determined that the packaging machine 10 is not in a switchable state (N in S8), the control unit 20 waits until the packaging machine 10 is in a switchable state and suspends execution of the switching process (S10), and then performs the switching process when the packaging machine 10 is in a switchable state (S9). If it is determined that the packaging machine 10 is not placed in a switchable state, the control unit 20 may present a message to an operator via the user interface 24.

The switching process here is a process in which the settings of the packaging machine 10 are switched based on the container processing information corresponding to the information on the switchable object newly acquired by the sensor 22. For example, the control unit 20 sets the operating parameters of the packaging machine 10 (e.g., the packaging processing unit 21) for the packaging processing based on the container processing information associated with the newly acquired information on the switchable object. Thus, performing the switching process enables the packaging processing by the packaging machine 10 to be performed under the setting conditions suitable for the "switchable object" newly used in connection with the packaging machine 10.

After the switching process in step S9 is completed, the control unit 20 performs a setting completion notification via the user interface 24 to present to the user that the packaging machine 10 has been properly set based on an appropriate container processing information (S11), and then this processing information setting flow is completed under the control of control unit 20.

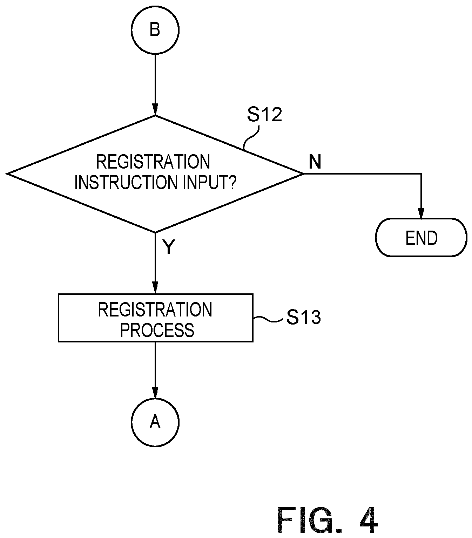

On the other hand, if it is determined in step S6 (see Fig. 2) described above that the newly acquired information on the switchable object is not registered in the database (N in S6), the control unit 20 determines whether an instruction to newly register the newly acquired information on the switchable object in the database (the memory unit 23 in the present example) has been input by an operator through the user interface 24 (S12 in Fig. 4). In this step S12, the control unit 20 may inform an operator via the user interface 24 that the newly acquired information of the switchable object is not yet registered in the database, or may inquire an operator via the user interface 24 whether the newly acquired information of the switchable object should be registered in the database.

If it is determined in this step S12 that no registration instruction indicating that the newly acquired information on the switchable object is to be registered in the database is input by an operator into the user interface 24 (N in S12), this processing information setting flow is terminated under the control of the control unit 20.

On the other hand, if it is determined that a registration instruction indicating that the newly acquired information on the switchable object is to be registered in the database has been input by an operator into the user interface 24 (Y in S12), the control unit 20 performs the registration process to register the newly acquired information on the switchable object in the database (S13). Specifically, the newly acquired information on the switchable object and the container processing information corresponding to the newly acquired information on the switchable object are mutually associated and stored in the database (the memory unit 23).

The control unit 20 can obtain, based on any method, the container processing information that is newly stored in the database in this manner. The control unit 20 may obtain at least a part of the container treatment information newly stored in the database, for example, based on information entered by an operator via the user interface 24 or from the external device 13 via the communication unit 25. When at least a part of the container processing information to be newly stored in the database is obtained based on information input by an operator via the user interface 24, the display unit of the user interface 24 may shift to the registration screen under the control of the control unit 20, and the user interface 24 may accept input by an operator through the registration screen.

After the registration process in step S13 is completed, steps S7 to S11 (see Fig. 3) described above are performed under the control of control unit 20. In other words, the switching process based on a switching instruction from an operator and the notification of the completion of the setting to a user are performed, and then this processing information setting flow is completed.

After the series of processes described above, the packaging processing by the packaging machine 10 is executed with the packaging machine 10 properly placed in a suitable state in which the setting is appropriately adjusted based on an appropriate container processing information (see S5 in Fig. 2 and S11 in Fig. 3).

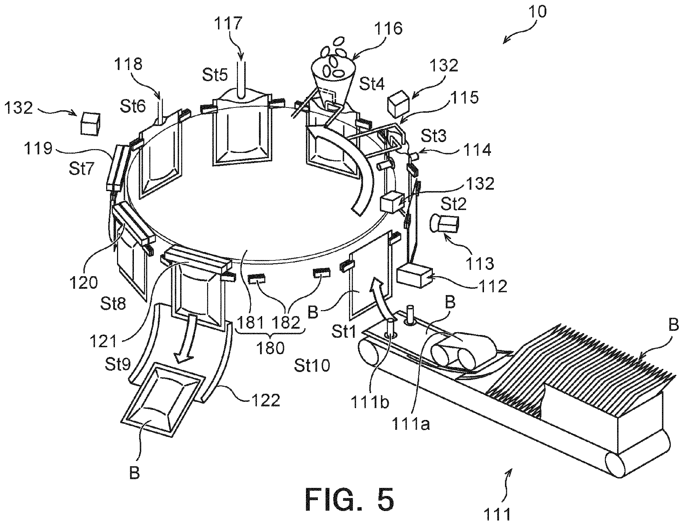

Fig. 5 is an oblique perspective diagram of an example of the packaging machine 10 (the container processing machine).

The packaging machine 10 shown in Fig. 5 comprises a conveyance device 180 that conveys bags B. The bags B conveyed by the conveyance device 180 go through a first station St1 to a ninth station St9 sequentially. The conveyance device 180 shown in Fig. 5 has a disk-shaped rotary table 181 and a plurality of gripper pairs 182 (ten pairs of grippers 182; a plurality of holding units) mounted on the rotary table 181.

The rotary table 181 has a circular planar shape and rotates intermittently with the central axis extending in the height direction as the axis of rotation. The ten gripper pairs 182 are attached to the periphery of the rotary table 181 at equal intervals in the direction of rotation, move intermittently along a circular path in accordance with the intermittent rotation of the rotary table 181, and intermittently stop at the first station St1 to a tenth station St10 in sequence.

Each gripper pair 182 has two grippers, and both edge portions of a bag B are gripped by said two grippers respectively in such a manner that the bag B is supported in a suspended state. In accordance with the intermittent rotation of the rotary table 181, a bag B supported by each gripper pair 182 moves intermittently along a circular path and stops intermittently at the first station St1 to the ninth station St9 in sequence. A bag B undergoes various types of processing while being intermittently stopped at each of the first station St1 to the ninth station St9.

At the first station St1, a bag (an empty bag) B is supplied to a gripper pair 182 by a bag supply device 111 and the gripper pair 182 suspends and supports the supplied bag B (a bag supply process). The bag supply device 111 shown in Fig. 5 includes a feed roller 111a that feeds bags B one by one, and take-out suction cups 111b that lift a bag B fed by the feed roller 111a and passes the bag B to a gripper pair 182 waiting at the first station St1.

A printing device 112 is also provided at the first station St1. The printing device 112 prints various information on a bag B (in particular, on a bag side wall) supported by a gripper pair 182 at the first station St1 (a printing process). The printing device 112 can perform the printing process on a bag B using a laser as an example, but can employ any other printing method and may print various information on a bag B using ink (e.g., inkjet).

The printing device 112 may be provided between the first station St1 and the second station St2. In this case, the printing device 112 may perform printing on a bag B while the bag B is moving together with a gripper pair 182 from the first station St1 to the second station St2.

A print inspection device 113 is provided at the second station St2. The print inspection device 113 inspects the state of printing on a bag B that is arranged with a gripper pair 182 at the second station St2 (a print inspection process). The print inspection device 113 is typically equipped with a camera (an image capturing device), but the specific configuration of the print inspection device 113 is not limited.

A mouth opening device 114 and a mouth opening maintenance device 115 are provided at the third station St3. The mouth opening device 114 is equipped with a mouth opening means, such as suction cups, and opens the mouth part of a bag B that is arranged with a gripper pair 182 at the third station St3 (a mouth opening process). The mouth opening maintenance device 115 moves together with a bag B from the third station St3 to the fourth station St4 while maintaining the opening state of the mouth of the bag B that has been opened by the mouth opening device 114.

A content feeding device 116 is provided at the fourth station St4. The content feeding device 116 is equipped with a content guiding means, such as a hopper, and feeds contents (e.g., solid contents) into a bag B that is arranged together with a gripper pair 182 at the fourth station St4 (a first content feeding process). The mouth opening maintenance device 115 is evacuated from a bag B and returns from the fourth station St4 to the third station St3 after the bag B reaches a state in which the mouth opening state can be stably maintained, such as after the content guiding means such as a hopper has entered inside of the bag B or contents have been fed into the bag B.

A content injecting device 117 is provided at the fifth station St5. The content injecting device 117 is equipped with a content guiding means, such as a nozzle, and injects a content (e.g., a liquid content) into a bag B that is arranged with a gripper pair 182 at the fifth station St5 (a second content feeding process). The contents supplied to a bag B from the content injecting device 117 at the fifth station St5 may be partially or completely the same as or completely different from the contents supplied to the bag B from the content feeding device 116 at the fourth station St4.

A steam supply device 118 is provided at the sixth station St6. The steam supply device 118 is equipped with a steam guiding means such as a nozzle, and injects high-temperature steam into a bag B that is arranged with a gripper pair 182 at the sixth station St6 (a steam injection process). This steam injection can expel air (including oxygen) from the bag B.

A first sealing device 119 and a second sealing device 120 are provided at the seventh station St7 and the eighth station St8, respectively. The first sealing device 119 and the second sealing device 120 perform heat sealing processes (a first sealing process and a second sealing process) while pinching the mouth part of bags B that are positioned with gripper pairs 182 at the seventh station St7 and the eighth station St8.

Only one of the first sealing device 119 and the second sealing device 120 may be provided as a sealing device, and a method other than a heat sealing (e.g., an ultrasonic sealing) may be employed as a sealing method.

A seal cooling device 121 and a release chute 122 are provided at the ninth station St9. The seal cooling device 121 nips and cools the sealed portion of a bag B that is arranged with a gripper pair 182 at the ninth station St9 (a cooling process) in such a manner that the sealing condition of the bag B is stabilized.

After the cooling process, a bag B is released from a gripper pair 182 and the seal cooling device 121 at the ninth station St9 and falls down, and is guided by the release chute 122 to a subsequent stage (a release process). If the seal cooling device 121 is able to support a bag B independently, the support of the bag B by the seal cooling device 121 may be released after the support of the bag B by the gripper pair 182 is released. Alternatively, the support of a bag B by a gripper pair 182 may be released after the support of the bag B by the seal cooling device 121 is released, or the support of a bag B by a gripper pair 182 and the seal cooling device 121 may be released simultaneously.

The tenth station St10, where the gripper pairs 182 stop intermittently between the ninth station St9 and the first station St1, may be an empty station or a processing station where any processing takes place. For example, a bag B that is determined to have a print defect or any other defect may not be released from the support at the ninth station St9 but may be released from the support by a gripper pair 182 at the tenth station St10.

The packaging machine 10 shown in Fig. 5 further comprises image capturing units 132 at the second station St2, the third station St3 and the seventh station St7, respectively. Each image capturing unit 132 continuously takes images of a desired part of the packaging machine 10 and/or a bag B to obtain imaging data (e.g., video data).

The locations of the image capturing units 132 are not limited to the example shown in Fig. 5, and the image capturing units 132 may be installed at any locations. For example, the image capturing units 132 may be installed above, to the side, or below objects to be photographed.

The bag supply device 111 (the feed roller 111a and the take-out suction cups 111b), the printing device 112, the print inspection device 113, the mouth opening device 114, the mouth opening maintenance device 115, the content feeding device 116, the content injecting device 117, the steam supply device 118, the first sealing device 119, the second sealing device 120, the seal cooling device 121, the conveyance device 180 (the rotary table 181 and the gripper pairs 182), the release chute 122 and the image capturing units 132 shown in Fig. 5 described above may be included in the packaging processing unit 21 shown in Fig. 1.

By applying the above-described packaging method (in particular, the processing information setting method (see Figs. 2 to 4)) to the packaging machine 10 shown in Fig. 5 described above, the packaging processing can be executed with the switchable object (such as bags B) in the packaging machine 10 appropriately switched to a desired one.

As explained above, the packaging processing method (the container processing method) performed by the packaging machine 10 (the container processing machine) including a step of acquiring information on a switchable object associated with the packaging machine 10 by the sensor 22, and a step of performing the packaging processing (the container processing) by the packaging machine 10 based on the container processing information associated with the acquired information on a switchable object is advantageous for properly switching the switchable object in the packaging machine 10 to a desired one.

Therefore, according to the packaging processing method and the packaging machine 10 of the present embodiment, it is possible to reduce the workload of an operator and production loss even if there is a defect in switching the switchable object, compared to a method of inspecting a switchable object, such as a bag, in the middle of a series of packaging processing steps.

By appropriately linking the type of the packaging machine 10 and the type of the switchable object (such as a bag), it is possible to perform the control of the packaging machine 10 triggered by the information on the switchable object. It is also possible to simultaneously produce a plurality of types of products using a single packaging machine 10, and for example, at the beginning or in the middle of the packaging processing, information on the switchable object may be acquired via the sensor 22 and the operation of the packaging machine 10 may be changed accordingly.

Further, according to the packaging processing method and the packaging machine 10 of the present embodiment, it is also possible to reduce the downtime when the packaging processing cannot be executed by the packaging machine 10 and to cooperate with other systems (such as a higher-level system). Furthermore, according to the present embodiment, it is possible to improve the quality of the packaging processing through system design, such as UX (i.e., user experience) design, that focuses on the user side, and it is also possible to reduce the user load associated with pre-inspection and the loss of materials required for the packaging processing.

Further, the switchable objects to which the packaging processing method and the packaging machine 10 of the present embodiment can be applied are not limited and may include containers, workpieces, contents to be introduced into containers, jigs and/or a person (an operator). Thus, the packaging processing method and the packaging machine 10 of the present embodiment are highly versatile. For example, the biometric information of an operator may be read by the sensor 22 and the operating authority of the packaging machine 10 (e.g., the control unit 20 or the user interface 24) may be automatically switched based on the read biometric information.

Further, the operating parameters of the packaging machine 10 (e.g., the packaging processing unit 21) for the packaging processing are set by the control unit 20 based on the container processing information, so that the packaging processing optimized for the switchable object can be performed.

Further, the information on the switchable object may be acquired at a plurality of locations. For example, information on the switchable object (e.g., a bag) may be acquired by the sensors 22 at two or more of the following locations: before, during and after the packaging processing performed by the packaging machine 10. In this case, the container processing information to be associated with the acquired information on the switchable object may be determined according to the location at which the switchable object information has been acquired.

Further, the operating parameters of the packaging machine 10 for the packaging processing may be set by the control unit 20 based on the state information indicating the current state of the packaging machine 10. Thereby, when the switchable object is switched, the packaging machine 10 (e.g., the packaging processing unit 21) is driven based on the operating parameters that take into account the current state of the packaging machine 10.

Further, when the packaging machine 10 includes a plurality of holding units (gripper pairs 182) for supporting a plurality of containers (such as bags B) as shown in Fig. 5, the operating parameters of the packaging machine 10 (e.g., the packaging processing unit 21) for the packaging processing may be set by the control unit 20, based on the identification information that identifies each of the plurality of holding units. In this case, for example, the packaging machine 10 (e.g., the packaging processing unit 21) is able to perform the packaging processing in which specific processing details differ, with respect to each holding unit, based on different operating parameters.

Further, the packaging machine 10 may provide at least any one of the acquired information on the switchable object and the container processing information associated with the acquired information on the switchable object, to devices other than the packaging machine 10 (e.g., to the upstream device 11, the downstream device 12 and/or the external device 13).

Further, the packaging processing performed by the packaging machine 10 may be determined by the location in the packaging machine 10 of the switchable object for which information is acquired by the sensors 22.

By applying the packaging processing method (the container processing method) and the packaging machine (the container processing machine) 10 described above as appropriate, the following processing can be performed, for example.

It is possible to read a barcode on a bag with the sensor 22 and switch the type of the packaging machine 10 accordingly.

It is possible to read a two-dimensional code printed on a container, such as a cup, with the sensor 22 and change the setting parameters of the packaging machine 10 accordingly.

It is possible to read a barcode with the sensor 22 and automatically change the type of packaging machine 10.

It is possible to obtain information on a bag and the fed materials (contents) by the sensor reading a RFID after feeding the contents into the bag and change the operation of the packaging machine 10 accordingly with respect to each bag.

It is possible to read a barcode given to a bag with the sensor 22 before setting the bag in the packaging machine 10 and check whether or not the pre-set bag is correct with the control unit 20.

It is possible to read the biometric information on a person such as an operator and automatically switch the authority to operate the processing system 1, such as the packaging machine 10, and other authorities accordingly.

It is possible to identify a product based on the pattern or design of a bag with the sensor 22 and automatically change the settings of the packaging machine 10 accordingly.

It is possible to automatically register the barcode information read from a bag using the sensor 22, as a processing type in the database.

### [Variant examples]

The packaging method (in particular, the processing information setting method) shown in Figs. 2 to 4 is merely one example and may include other steps. For example, after the setting of the packaging machine 10 based on the container processing information is completed (see S5 in Fig. 2 and S11 in Fig. 3), a step may be performed to check the consistency of the settings of the entire packaging machine 10.

Further, even when the same bag is used in the packaging processing of the packaging machine 10, different types of packaging processing may be performed. Therefore, for example, when acquiring information on the switchable object by the sensor 22, a predetermined number (e.g., three) of type informations (the container processing information for the entire packaging processing) may be presented in the user interface 24. When a plurality of type informations (the container processing information) are associated with one switchable object information as a whole packaging processing in this manner, the type informations may be presented in the user interface 24 in such a manner that an operator can select a specific type information from among these type informations.

Further, although the conveyance device 180 shown in Fig. 5 includes the rotary table 181 and the gripper pairs 182, the configuration of the conveyance device for conveying bags (containers) B is not limited. The conveyance device may, for example, use magnetic force or other forces to move each holding unit for supporting a container. As an example, the conveyance device may have a linear motor (not shown in the drawings) that uses magnetic force to power each carrier (a moving body) on which a holding unit is mounted.

It should be noted that the embodiments and the variant examples disclosed in the present description are merely shown as examples in all respects and are not to be construed as limiting. The above-described embodiments and variant examples may be omitted, substituted and modified in various forms without departing from the scope and intent of the appended claims. For example, the above-described embodiments and variant examples may be combined in whole or in part, and embodiments other than those described above may be combined with the above embodiments and variant examples. In addition, the effects of the present disclosure described in the present description are merely stated as examples, and other effects may be brought about.

The technical categories in which the above technical ideas are embodied are not limited. For example, the technical ideas described above may be embodied by a computer program for causing a computer to execute one or more procedures (steps) included in a method of manufacturing the devices described above or a method of using the devices described above. The above technical ideas may also be embodied by a computer-readable non-transitory recording medium on which such a computer program is recorded.

### [Additional notes]

The present disclosure technology may be embodied as follows.

### [Item 1]

A container processing method including the steps of:
acquiring information on a switchable object associated with a container processing machine with a sensor; and
performing a container processing with the container processing machine, based on a container processing information that is associated with the acquired information on a switchable object.

### [Item 2]

The container processing method as defined in Item 1, wherein the switchable object includes at least one of a container, a workpiece, a content introduced into a container, and a jig.

### [Item 3]

The container processing method as defined in Item 1 or 2, wherein an operating parameter of the container processing machine for the container processing is set by a control unit, based on the container processing information.

### [Item 4]

The container processing method as defined in any one of Items 1 to 3, wherein:
the information on a switchable object can be obtained at a plurality of locations, and
the container processing information that is associated with the acquired information on a switchable object is determined according to a location where the information on a switchable object is acquired.

### [Item 5]

The container processing method as defined in any one of Items 1 to 4, wherein an operating parameter of the container processing machine for the container processing is set by a control unit, based on a state information indicating a current state of the container processing machine.

### [Item 6]

The container processing method as defined in any one of Items 1 to 5, wherein:
the container processing machine includes a plurality of holding units for supporting a plurality of containers, and
an operating parameter of the container processing machine for the container processing is set by a control unit, based on an identification information that identifies each of the plurality of holding units.

### [Item 7]

The container processing method as defined in any one of Items 1 to 6, including a step of providing at least one of the acquired information on a switchable object and the container processing information associated with the acquired information on a switchable object, to a device other than the container processing machine.

### [Item 8]

The container processing method as defined in any one of Items 1 to 7, wherein the container processing performed by the container processing machine is determined by a location of the switchable object.

### [Item 9]

The container processing method as defined in any one of Items 1 to 8, including a step of registering the acquired information on a switchable object and the associated container processing information in a database in a form of the acquired information on a switchable object and the associated container processing information being associated with each other when the container processing information associated with the acquired information on a switchable object is not registered in the database in which the information on a switchable object and the associated container processing information is registered in a form of the acquired information on a switchable object and the associated container processing information being associated with each other.

### [Item 10]

The container processing method as defined in any one of Items 1 to 9, wherein the sensor acquires the information on a switchable object optically or via wireless communication.

### [Item 11]

A container processing machine comprising:
a control unit; and
a container processing unit that performs a container processing under control of the control unit,
wherein the control unit
   acquires information on a switchable object associated with a container processing machine, via a sensor, and
   performs the container processing based on container processing information that associated with the acquired information on a switchable object.

## Claims

1. A container processing method including the steps of:
acquiring information on a switchable object associated with a container processing machine with a sensor; and
performing a container processing with the container processing machine, based on a container processing information that is associated with the acquired information on a switchable object.

2. The container processing method as defined in claim 1, wherein the switchable object includes at least one of a container, a workpiece, a content introduced into a container, and a jig.

3. The container processing method as defined in claim 1 or 2, wherein an operating parameter of the container processing machine for the container processing is set by a control unit, based on the container processing information.

4. The container processing method as defined in any one of claims 1 to 3, wherein:
the information on a switchable object can be obtained at a plurality of locations, and
the container processing information that is associated with the acquired information on a switchable object is determined according to a location where the information on a switchable object is acquired.

5. The container processing method as defined in any one of claims 1 to 4, wherein an operating parameter of the container processing machine for the container processing is set by a control unit, based on a state information indicating a current state of the container processing machine.

6. The container processing method as defined in any one of claims 1 to 5, wherein:
the container processing machine includes a plurality of holding units for supporting a plurality of containers, and
an operating parameter of the container processing machine for the container processing is set by a control unit, based on an identification information that identifies each of the plurality of holding units.

7. The container processing method as defined in any one of claims 1 to 6, including a step of providing at least one of the acquired information on a switchable object and the container processing information associated with the acquired information on a switchable object, to a device other than the container processing machine.

8. The container processing method as defined in any one of claims 1 to 7, wherein the container processing performed by the container processing machine is determined by a location of the switchable object.

9. The container processing method as defined in any one of claims 1 to 8, including a step of registering the acquired information on a switchable object and the associated container processing information in a database in a form of the acquired information on a switchable object and the associated container processing information being associated with each other when the container processing information associated with the acquired information on a switchable object is not registered in the database in which the information on a switchable object and the associated container processing information is registered in a form of the acquired information on a switchable object and the associated container processing information being associated with each other.

10. The container processing method as defined in any one of claims 1 to 9, wherein the sensor acquires the information on a switchable object optically or via wireless communication.

11. A container processing machine comprising:
a control unit; and
a container processing unit that performs a container processing under control of the control unit,
wherein the control unit
acquires information on a switchable object associated with a container processing machine, via a sensor, and
performs the container processing based on container processing information that associated with the acquired information on a switchable object.
